(19) Europäisches Patentamt

European Patent Office

Office européen des brevets

(11) **EP 0 436 211 B1**

(12) **EUROPEAN PATENT SPECIFICATION**

(45) Date of publication and mention
of the grant of the patent:
**11.07.2001 Bulletin 2001/28**

(51) Int Cl.⁷: **G06F 12/06**, G06F 11/00

(21) Application number: **90125335.1**

(22) Date of filing: **22.12.1990**

(54) **Apparatus enabling observation of internal memory-mapped registers**

Vorrichtung die die Beobachtung interner speicherzugeordneten Register ermöglicht

Dispositif permettant l'observation de registres internes à mémoire mappée

(84) Designated Contracting States:
**DE FR GB IT**

(30) Priority: **04.01.1990 US 461023**

(43) Date of publication of application:
**10.07.1991 Bulletin 1991/28**

(73) Proprietor: **NATIONAL SEMICONDUCTOR CORPORATION**
**Santa Clara California 95051 (US)**

(72) Inventors:
 • **Bikowsky, Zeev**
 **Netanya (IL)**
 • **Biran, Dan**
 **Raana (IL)**
 • **Intrater, Gideon**
 **Ramat Gan (IL)**
 • **Hadas, Yair**
 **Raanana (IL)**
 • **Peleg Zohar**
 **Yavne (IL)**
 • **Ostrer, Aharon**
 **Herzlia B (IL)**
 • **Ben-Zeev, Yigal**
 **Nahariya (IL)**
 • **Lidor, David**
 **Ganei Tzahala, Tel Aviv (IL)**

(74) Representative: **Sparing Röhl Henseler**
**Patentanwälte**
**Postfach 14 04 43**
**40074 Düsseldorf (DE)**

(56) References cited:
 **EP-A- 0 313 848**       **US-A- 4 674 089**

**Description**

The present invention relates to data processing systems according to the preamble of claim 1.

In conventional digital data processing systems with n-bit architecture, the central processing unit (CPU) is capable of generating $2^n$ addresses for referencing instructions or data. For example, a 16-bit computer is capable of generating $2^{16}$ or 65,536 addresses. These addresses are generally used to reference devices which are located outside the CPU environment, so-called peripheral or external devices. The interface between the CPU and the peripheral devices consists of a system bus, including an address bus and a data bus, wherein the CPU, responding to an instruction request, sends an address onto the address bus which is connected to the peripheral device. If the peripheral device is memory storage, then data can be transferred directly between the CPU and memory by means of the data bus. If, however, the peripheral device is something other than a memory device, such as a printer, modem, or a co-processor, then additional hardware is generally required in the peripheral device in order to decode and act on the address reference.

In order to avoid the need for this additional hardware, a technique called "memory-mapped I/O" is used. According to this technique, the transfer of data to and from peripheral devices is accomplished by using some of the normally available memory space. Memory addresses are decoded within the peripheral device and thus are used to determine when a specific device is being addressed. Usually, each type of function within the peripheral device is assigned a memory address and may then be accessed by the CPU. For example, the status, control and data registers within the peripheral devices are each assigned a memory address and thus three addresses are required for the CPU to perform an I/O operation with this peripheral device. Using memory-mapped I/O in this fashion allows I/O operations to be performed directly in a high-level language, i.e., an I/O device may be declared as a data structure and then manipulated with the use of pointers.

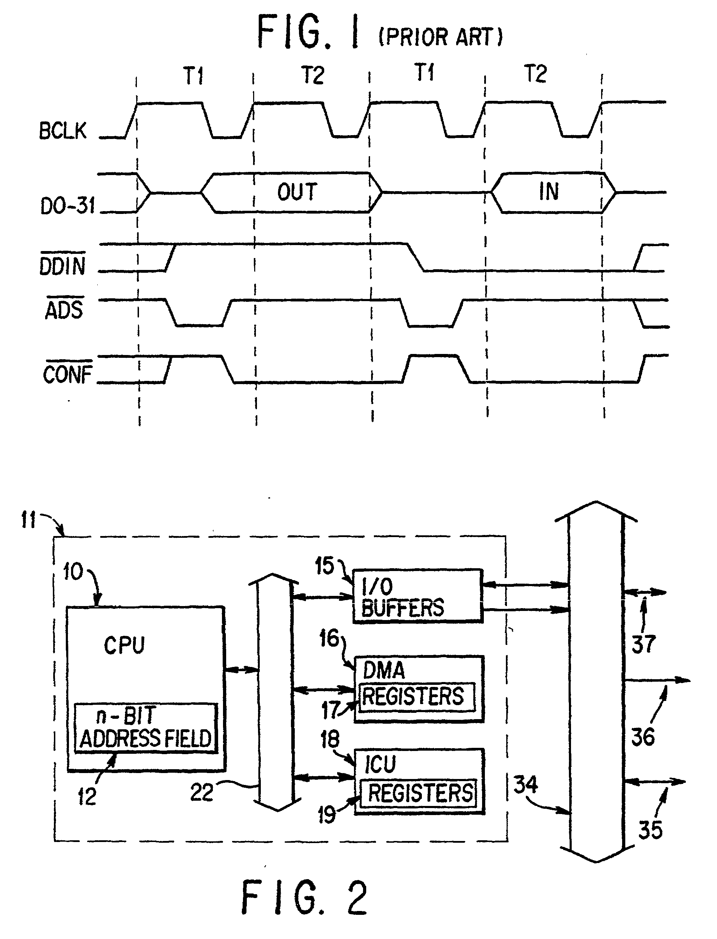

Referring to Fig. 1, in a conventional microprocessor architecture, the sequence of events occurring during a basic CPU access to either memory or peripheral device for a read transaction or a write transaction is performed in two cycles of a bus clock, the cycles commonly being labeled T1 and T2. During the first half of cycle T1, the CPU asserts an Address Strobe signal $\overline{ADS}$ which indicates that a bus cycle has begun and that a valid address is on the Address Bus. From the beginning of cycle T1 until the completion of the bus cycle, the CPU drives the Address Bus and other relevant control signals. If the bus cycle is not cancelled (e.g. cycle T2 is entered in the next clock cycle), the CPU will assert a Confirm signal $\overline{CONF}$ in the middle of cycle T1 to indicate that the bus cycle initiated by the Address Strobe $\overline{ADS}$ is valid. A confirmed bus cycle is completed at the end of cycle T2. In the case of a read operation, the CPU samples the Data Bus at the end of cycle T2. If a bus exception is detected, then data on the Data Bus is ignored. For write operations, valid data is output on the Data Bus to the address indicated on the Address Bus from the middle of cycle T1 until the end of the cycle.

The desire for improved microprocessor performance is leading to integration of certain functions which, in the past, had been external to the CPU (e.g. peripheral devices such as controllers and co-processors). Integration of these functions means that the status, control and data registers associated with the newly-integrated functions are located internally to the CPU, not externally as before. Thus, while these registers may still be referenced as memory-mapped, the CPU access to the internal memory-mapped registers no longer occurs over the external bus, but rather occurs over an internal bus, thus making the transaction essentially transparent to the user. The inability to observe the read/write operations of these internal registers makes it extremely difficult to trace CPU activity and it becomes very difficult to debug the system.

Some systems, e.g., the Intel 80186 microprocessor, solve the problem by showing accesses to internal memory-mapped registers as normal read/write cycles, as described above. However, the CPU ignores the synchronous and asynchronous ready bits as well as the data bus, thus the data contained in the internal memory-mapped registers can not be observed.

In National Semiconductor's HPC 16083 controller, the read and write strobes are inhibited. Thus, during a write operation, the data is presented on the bus, whereas during a read operation, data is not presented on the bus.

A data processing system according to the preamble of claim 1 is known from EP-A-0 313 848 and comprises an integrated microprocessor device with a CPU, a timer and an internal bus coupling the CPU to the functional device eg. timer and to an external system bus which includes an address bus and a data bus. The CPU comprises means for transferring data between the CPU and memory-mapped registers of the functional device over the internal bus and for transferring data between the CPU and a memory-mapped external device over the internal bus and the external system bus, means for asserting a signal to indicate to devices outside the integrated microprocessor device when a data transfer to/from an external device is taking place, means for generating a signal to indicate to devices outside the integrated microprocessor device the direction of a data transfer between the CPU and the functional device or an external device, and means for presenting the data being transferred between the CPU and the functional device on the external system bus. This system requires connection with the internal bus whenever the peripheral device is addressed.

The present invention as defined in claim 1, in brief provides a microprocessor architecture which allows the contents transferred to/from internal memory-mapped registers to be observed. This is achieved by adding a new CPU output signal to the conventional architecture which indicates that an internal bus cycle is underway, deactivating the CPU output signal which validates an external reference cycle and, when accessing the contents of the internal memory-mapped registers, placing the information transferred on the data bus for observation.

The present invention will thus aid system programmers by allowing them to trace program activity with the internal registers of the CPU, an invaluable debugging tool. This will further facilitate the integration of controllers and co-processors on-chip since system designers will now be able to troubleshoot internal problems associated with integration.

The foregoing and other objectives, features and advantages of the invention will be more readily understood upon consideration of the following detailed description of a preferred embodiment of the invention, taken in conjunction with the accompanying drawings.

Fig. 1 is a timing diagram illustrating a read and write cycle of a conventional microprocessor.

Fig. 2 is a block diagram illustrating a typical microprocessor chip with integrated controllers.

Fig. 3 is a block diagram illustrating memory allocation of a microprocessor which utilizes memory-mapped addressing.

Fig.4 is a timing diagram illustrating internal read and write cycles of a microprocessor in accord with the present invention.

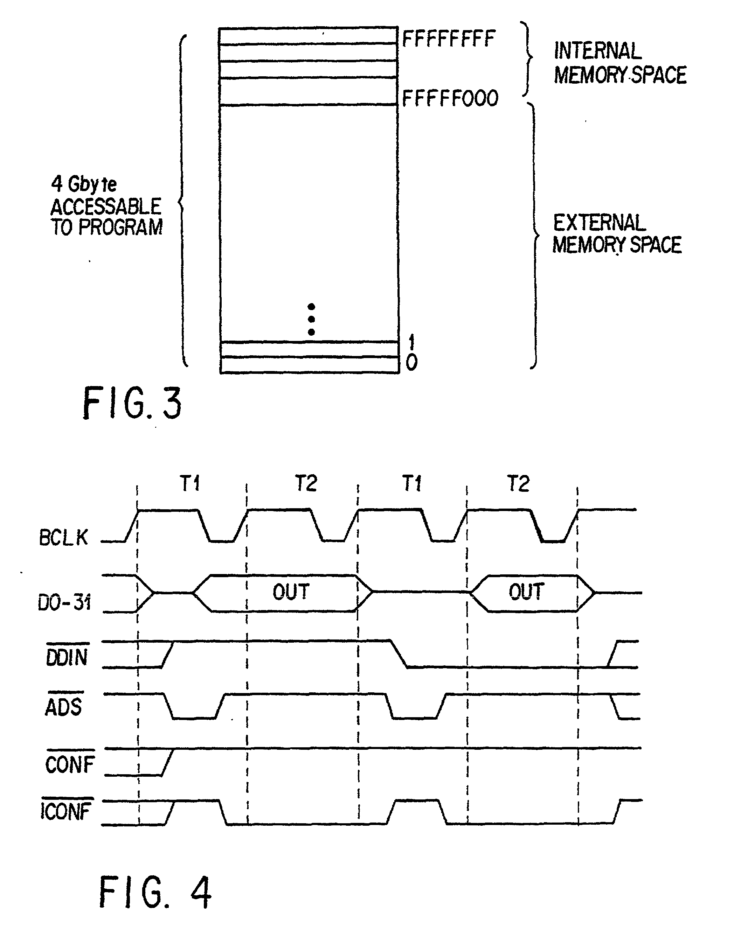

Fig.2 shows a general block diagram of a microprocessor (CPU) 10 with Direct Memory Access (DMA) 16 and Interrupt Control Unit (ICU) 18 integrated on chip 11. The DMA 16 and ICU 18 are interfaced with the CPU 10 by means of an internal bus 22. User interface to the DMA 16 and ICU 18 is provided via the I/O buffers 15 on the system bus 34, which includes a Data Bus 35, an Address Bus 36 and I/O pins 37. The CPU 10 is capable of addressing $2^N$ locations, where N is the number of bits in the CPU's address field 12. The memory of the CPU 10 is organized as a set of linear addresses beginning at 0 and ending at $2^N-1$. A portion of these memory addresses are dedicated for memory-mapping. For example, in National Semiconductor's NS-32532 32-bit microprocessor chip, $2_{32}$ (4 gigabytes) of linear address space can be referenced and these addresses are numbered sequentially starting at zero and ending at $2^{32}-1$. As shown in Fig. 3, the hex addresses in the range FFFFFOOO to FFFFFFFF are dedicated to on-chip ("internal") memory-mapped registers. The DMA 16 and ICU 18 each have Control and Status Registers 17 and 19, respectively, which are referenced as memory-mapped registers.

The basic CPU operation to read from and write to external memory and peripheral devices consists of activating a first output signal to indicate that a bus cycle has begun and that there is a valid address on the Address Bus 36. Next, if the bus cycle is not cancelled, a second output signal is asserted which qualifies access to the peripheral by confirming that a valid bus cycle is underway. Lastly, access to the peripheral is gained and the data is presented on the Data Bus 35, the direction of data transfer depending on the value of a third output signal. For example, referring to Fig. 1, in the National Semiconductor NS-32532 microprocessor, the basic bus cycles occur during two cycles (T1 and T2) of the Bus Clock BCLK. The CPU asserts Address Strobe signal $\overline{ADS}$ during the first half of cycle T1 to indicate the beginning of a bus cycle. Next, the CPU asserts a Confirm Bus Cycle signal $\overline{CONF}$ to allow external access, $\overline{CONF}$ being active from the middle of cycle T1 until the completion of the bus cycle, at which time $\overline{CONF}$ is negated. Data transfer may then take place and be observed on the Data Bus 35. The direction of transfer is indicated by output signal Data Direction $\overline{DDIN}$, i.e., write when $\overline{DDIN}$ is high and read when $\overline{DDIN}$ is low.

In contrast to a normal read or write request involving an externally located peripheral, the on-chip registers 17 and 19 cannot be readily observed on the system bus 34. Therefore, according to the present invention, the normal read/write cycle may be modified by deactivating the output signal which allows external access and by asserting a fourth output signal which indicates that access to internal memory-mapped registers 17 and 19 will take place. The contents of the internal registers 17 and 19 may then be observed on the Data Bus 35. As shown in Fig. 4, in this case $\overline{CONF}$ is held inactive, thus disabling external memory access. A new output signal, Confirm Internal Bus Cycle $\overline{ICONF}$ is then asserted indicating internal access is requested and bus control inputs should be ignored. Data is presented on the data bus 35. Note, however, that on internal read cycles, $\overline{DDIN}$ is low, but the data direction is the same as in a write cycle.

**Claims**

1. A data processing system having a system bus (34), at least one peripheral device connected to the system bus (34), and an integrated microprocessor device (11) connected to the system bus (34),

   said microprocessor device (11) comprising a CPU (10),
   at least one functional device (16, 18),
   an internal bus (22) coupling the CPU (10) to the at least one functional device (16, 18) and to the system bus (34) which includes an address bus (36) and a data bus (35), wherein the CPU (10) comprises:

   means for transferring data between the CPU (10) and a functional device (16, 18) over the internal bus (22) and for transferring data between the CPU (10) and a peripheral device over the internal bus (22) and the system bus (34),
means for asserting a first signal (CONF) observable outside the integrated microprocessor device (11) when a data transfer to/from a peripheral device is taking place,
means for generating a second signal (DDIN) to indicate to devices outside the integrated microprocessor device (11) the direction of a data transfer between the CPU (10) and a functional device (16, 18) or a peripheral device, and
means for presenting the data being transferred between the CPU (10) and a functional device (16, 18) on the system bus (34),

characterized in that
the CPU (10) comprises means for asserting a third signal (ICONF) observable outside the integrated microprocessor device (11) when a data transfer to/ from a functional device (16, 18) is taking place.

2. The system of claim 1, characterized in that the internal bus (22) is connected to the system bus (34) via I/O buffer means (15).

3. The system of claim 1 or 2, characterized in that access to the system bus (34) occurs when the first signal (CONF) is active and the third signal (ICONF) is inactive or vice versa.


**Patentansprüche**

1. Datenverarbeitungssystem, das einen Systembus (34), wenigstens eine an den Systembus (34) angeschlossene Peripherievorrichtung sowie eine an den Systembus (34) angeschlossene integrierte Mikroprozessorvorrichtung (11) enthält,
wobei die Mikroprozessorvorrichtung umfaßt:

eine CPU (10),
wenigstens eine funktionale Vorrichtung (16, 18),
einen internen Bus (22), der die CPU (10) mit der wenigstens einen funktionalen Vorrichtung (16, 18) und mit dem Systembus (34), der einen Adressenbus (36) und einen Datenbus (35) enthält, koppelt, wobei die CPU (10) umfaßt:
eine Einrichtung zum Übertragen von Daten zwischen der CPU (10) und einer funktionalen Vorrichtung (16, 18) über den internen Bus (22) und zum Übertragen von Daten zwischen der CPU (10) und einer Peripherievorrichtung über den internen Bus (22) und den Systembus (34),

eine Einrichtung zum Bestätigen eines ersten Signals (CONF), das von außerhalb der integrierten Mikroprozessorvorrichtung (11) beobachtbar ist, wenn eine Datenübertragung zu/ von einer Peripherievorrichtung stattfindet,
eine Einrichtung zum Erzeugen eines zweiten Signals (DDIN), um Vorrichtungen außerhalb der integrierten Mikroprozessorvorrichtung (11) die Richtung einer Datenübertragung zwischen der CPU (10) und einer funktionalen Vorrichtung (16, 18) oder einer Peripherievorrichtung anzugeben, und
eine Einrichtung zum Darstellen der Daten, die zwischen der CPU (10) und einer funktionalen Vorrichtung (16, 18) auf dem Systembus (34) übertragen werden,

dadurch gekennzeichnet, daß
die CPU (10) eine Einrichtung zum Bestätigen eines dritten Signals (ICONF), das außerhalb der integrierten Mikroprozessorvorrichtung (11) beobachtbar ist, wenn eine Datenübertragung zu/von einer funktionalen Vorrichtung (16, 18) stattfindet, umfaßt.

2. System nach Anspruch 1, dadurch gekennzeichnet, daß der interne Bus (22) an den Systembus (34) über eine E/A-Puffereinrichtung (15) angeschlossen ist.

3. System nach Anspruch 1 oder 2, dadurch gekennzeichnet, daß ein Zugriff auf den Systembus (34) erfolgt, wenn das erste Signal (CONF) aktiv ist und das dritte Signal (ICONF) inaktiv ist oder umgekehrt.


**Revendications**

1. Système de traitement de données comportant un bus de système (34), au moins un dispositif périphérique connecté au bus de système (34), et un dispositif à microprocesseur intégré (11) connecté au bus de système (34), ledit dispositif à microprocesseur (11) comprenant :

- une unité centrale CPU (10),
- au moins un dispositif fonctionnel (16, 18),
- un bus interne (22) reliant l'unité CPU (10) au dispositif fonctionnel (16, 18) et au bus de système (34) lequel inclut un bus d'adresse (36) et un bus de données (35), dans lequel l'unité CPU (10) comporte :

- des moyens pour transférer des données entre l'unité CPU (10) et un dispositif fonctionnel (16, 18) via le bus interne (22) et pour transférer des données entre l'unité CPU (10) et un dispositif périphérique via le bus interne (22) et le bus de système (34) ;

- des moyens pour émettre un premier signal (CONF) observable à l'extérieur du dispositif à microprocesseur intégré (11) lorsqu'un transfert de données en direction ou en provenance d'un dispositif périphérique se met en place ;

- des moyens pour produire un second signal (DDIN) pour indiquer aux dispositifs extérieurs au dispositif à microprocesseur intégré (11) le sens d'un transfert de données entre l'unité CPU (10) et un dispositif fonctionnel (16, 18) ou un dispositif périphérique, et

- des moyens pour présenter les données en transfert entre l'unité CPU (10) et un dispositif fonctionnel (16, 18) sur le bus de système (34) ;

caractérisé en ce que l'unité CPU (10) comprend des moyens pour émettre un troisième signal (ICONF) observable à l'extérieur du dispositif à microprocesseur intégré (11) lorsqu'un transfert de données en direction ou en provenance d'un dispositif fonctionnel (16, 18) se met en place.

2. Système selon la revendication 1, caractérisé en ce que le bus interne (22) est connecté au bus de système (34) via des moyens formant tampon d'entrée/sortie (15).

3. Système selon la revendication 1 ou 2, caractérisé en ce que l'accès au bus de système (34) s'établit lorsque le premier signal (CONF) est actif et le troisième signal (ICONF) est inactif ou vice versa.

# FIG. 1 (PRIOR ART)

# FIG. 2

FFFFFFFF

INTERNAL
MEMORY SPACE

FFFFF000

4 Gbyte
ACCESSABLE
TO PROGRAM

EXTERNAL
MEMORY SPACE

1

0

# FIG.3

T1　　　T2　　　T1　　　T2

BCLK

DO-31　　OUT　　　OUT

DDIN

ADS

CONF

ICONF

# FIG. 4